# EUROPÄISCHE PATENTSCHRIFT

(11) **EP 3 730 430 B1**
(45) Veröffentlichungstag und Bekanntmachung des Hinweises auf die Patenterteilung: **01.09.2021**
(21) Anmeldenummer: 19000196.6
(22) Anmeldetag: 23.04.2019
(51) Int. Cl.: B25J 1/00

(54) **ÜBERGABEEINHEIT UND VERFAHREN ZUM TRANSFERIEREN VON BLISTERPACKUNGEN**
TRANSFER UNIT AND METHOD FOR TRANSFERRING BLISTER PACKS
UNITÉ DE TRANSFERT ET PROCÉDÉ DE TRANSFERT DES EMBALLAGES BLISTER

(43) Veröffentlichungstag der Anmeldung: 28.10.2020
(73) Patentinhaber: Uhlmann Pac-Systeme GmbH & Co. KG, 88471 Laupheim (DE)
(72) Erfinder: HÄHNEL, Bernd, 76297 Stutensee (DE); HALLER, Thomas, 88289 Waldburg (DE); BRÄUNIG, Tim, 89231 Neu-Ulm (DE); LOCK, Bernd, 88433 Schemmerhofen (DE); KLEINE-HEGERMANN, David, 46282 Dorsten (DE); RODI, Wolfgang, 88471 Laupheim / Baustetten (DE)
(74) Vertreter: Wächter, Jochen

(56) Entgegenhaltungen:
- EP-A1- 2 840 029
- EP-A1- 3 339 192
- WO-A1-2011/122001
- WO-A1-2014/181307

## Beschreibung

Die vorliegende Erfindung betrifft eine Übergabeeinheit und ein Verfahren zum Transferieren von Blisterpackungen.

Blisterpackungen werden häufig in der pharmazeutischen Industrie bei der Verpackung von Medikamenten verwendet. Hierbei wird zunächst in einer Folienbahn eine Vielzahl von Näpfen gebildet, in welche Produkte, wie etwa Dragees oder Tabletten, eingebracht werden. Anschließend wird die Folienbahn mit den befüllten Näpfen mit einer Deckfolie versiegelt und einer Stanzstation zugeführt, in der die jeweiligen Blisterpackungen aus der Folienbahn ausgestanzt werden.

In einer weiteren Phase des Verpackungsprozesses werden die ausgestanzten Blisterpackungen mit Hilfe einer Transferiervorrichtung an ein Fördermittel übertragen. Die Blisterpackungen werden dabei in Stapeln in jeweiligen Aufnahmen des Fördermittels abgelegt. Abschließend werden die auf dem Fördermittel angeordneten Stapel von Blisterpackungen einer Verpackungsstation zugeführt, in der die Stapel von Blisterpackungen in entsprechende Verpackungen, wie etwa Faltschachteln, eingebracht werden. Die Zeit, welche die Transferiervorrichtung für die Übergabe von Blisterpackungen von der Stanzstation an das Fördermittel benötigt, hat logischerweise einen Einfluss auf den Durchsatz der gesamten Verpackungsmaschine.

Aus Dokument EP 2 840 029 A1 sind die Merkmale des Oberbegriffs des Anspruchs 1 bekannt.

Der Erfindung liegt die Aufgabe zugrunde, eine verbesserte Übergabeeinheit und ein Verfahren zum Transferieren von Blisterpackungen zu schaffen, wobei der Transfer von Blisterpackungen besonders effizient, präzise und schnell erfolgt und zudem die Ausrichtung der Blisterverpackungen geändert wird.

Diese Aufgabe wird durch die Merkmale des Anspruchs 1 gelöst.

Die erfindungsgemäße Übergabeeinheit zum Transferieren von Blisterpackungen umfasst mindestens einen Transferarm, der bewegbar ist zwischen einer Aufnahmestellung zum Aufnehmen einer Blisterpackung von einer Aufnahmeposition und einer Abgabestellung zum Ablegen der Blisterpackung in einer Abgabeposition. Der mindestens eine Transferarm weist ein erstes Segment und ein zweites Segment auf, wobei das erste Segment um eine erste Achse, die zwischen der Aufnahmeposition und der Abgabeposition angeordnet ist, drehbar befestigt ist. Das erste Segment weist einen Abschnitt auf, an dem das zweite Segment drehbar um eine unter einem Winkel von im Wesentlichen 45° oder im Wesentlichen 135° zur ersten Achse angeordnete ortsveränderliche zweite Achse befestigt ist, wobei an dem zweiten Segment ein Halteorgan zum Aufnehmen und Halten einer Blisterpackung angeordnet ist. Der mindestens eine Transferarm ist derart ausgestaltet und angesteuert, dass die Bewegung des mindestens einen Transferarms von der Aufnahmestellung zur Abgabestellung und zurück eine kombinierte Bewegung ist, die sich zumindest aus einer ersten Drehbewegung des ersten Segments und des zweiten Segments um die erste Achse und einer zweiten Drehbewegung des zweiten Segments um die zweite Achse zusammensetzt. Der mindestens eine Transferarm ist derart ausgestaltet und angesteuert, dass die Blisterpackung von dem Halteorgan des mindestens einen Transferarms an der Aufnahmeposition mit einer flächigen Seite der Blisterpackung nach oben gerichtet von oben aufgenommen wird und an der Abgabeposition mit derselben flächigen Seite nach oben gerichtet von oben abgelegt wird, wobei die Abgabeposition um im Wesentlichen 90° oder im Wesentlichen 270° verdreht zur Aufnahmeposition angeordnet ist.

Auf diese Weise wird eine zuverlässige Übergabe von Blisterpackungen gewährleistet, bei der auf einfache Weise und mit hohem Durchsatz Blisterpackungen unter Änderung ihrer Ausrichtung übergeben werden können.

Variante A umfasst dabei genau einen Transferarm. Die weiter unten beschriebenen Varianten B, C und D umfassen jeweils zwei Transferarme.

Vorzugsweise führt das zweite Segment und somit die am Halteorgan gehaltene Blisterpackung eine Drehbewegung um die zweite Achse von im Wesentlichen 180° aus, wenn sich der mindestens eine Transferarm von der Aufnahmestellung zur Abgabestellung oder umgekehrt bewegt. Diese Drehbewegung sorgt auf einfache Weise dafür, dass sich die Blisterpackung während der Übergabe um im Wesentlichen 90° oder im Wesentlichen 270° um ihren Mittelpunkt dreht. Dies wiederum gewährleistet, dass die Blisterpackung mit derselben flächigen Seite nach oben gerichtet abgelegt werden kann.

In einer bevorzugten Ausgestaltung führt das erste Segment eine Drehbewegung um die erste Achse von 120° bis 180° aus, wenn sich der mindestens eine Transferarm von der Aufnahmestellung zur Abgabestellung oder umgekehrt bewegt. Sowohl die Aufnahmeposition als auch die Abgabeposition sind in der Regel horizontal angeordnet. Allerdings ist es denkbar, dass das Halteorgan vom zweiten Segment des Transferarms schräg abragt, sodass das erste Segment lediglich über einen geringeren Winkelbereich verschwenkt werden muss als der Winkel, der von der Blisterpackung von der Aufnahmeposition zur Abgabeposition zurückzulegen ist.

Aufgrund der geometrischen Anordnung von erster und zweiter Achse bewegt sich die zweite Achse entlang eines Kegelmantelabschnitts bewegt, wenn sich der mindestens eine Transferarm von der Aufnahmestellung zur Abgabestellung oder umgekehrt bewegt. Dies führt zur 90°-Drehung bzw. 270°-Drehung der Blisterpackung um ihren Mittelpunkt.

Zur Anpassung an verschiedene Formate der Blisterpackungen kann in einer bevorzugten Ausgestaltung der mindestens eine Transferarm parallel zur ersten Achse verschiebbar gelagert sein.

In einer Variante B weist die Übergabeeinheit einen ersten Transferarm, der bewegbar ist zwischen einer ersten Aufnahmestellung zum Aufnehmen einer ersten Blisterpackung von einer ersten Aufnahmeposition und einer ersten Abgabestellung zum Ablegen der ersten Blisterpackung in einer Abgabeposition, sowie einen zweiten Transferarm auf, der bewegbar ist zwischen einer zweiten Aufnahmestellung zum Aufnehmen einer zweiten Blisterpackung von einer zweiten Aufnahmeposition und einer zweiten Abgabestellung zum Ablegen der zweiten Blisterpackung in derselben Abgabeposition, wobei der erste und der zweite Transferarm zu beiden Seiten einer Längsmittelebene der Übergabeeinheit angeordnet sind, wobei die erste und zweite Aufnahmeposition bezüglich der Längsmittelebene nach außen versetzt angeordnet sind und die Abgabeposition im Bereich der Längsmittelebene angeordnet ist, wobei die erste und zweite Aufnahmeposition in einer Reihe quer zur Längsmittelebene nebeneinander angeordnet sind, und wobei die Abgabeposition um im Wesentlichen 90° oder im Wesentlichen 270° verdreht zur ersten und zweiten Aufnahmeposition angeordnet ist. Mit dieser Ausgestaltung wird eine einfache Einweichung von zwei Linien auf eine Linie erreicht, wobei gleichzeitig die Blisterpackungen in einem Stapel um im Wesentlichen 90° oder im Wesentlichen 270° um ihre Mittelpunkte verdreht abgelegt werden.

In einer weiteren Variante C weist die Übergabeeinheit einen ersten Transferarm, der bewegbar ist zwischen einer ersten Aufnahmestellung zum Aufnehmen einer ersten Blisterpackung von einer ersten Aufnahmeposition und einer ersten Abgabestellung zum Ablegen der ersten Blisterpackung in einer ersten Abgabeposition, sowie einen zweiten Transferarm auf, der bewegbar ist zwischen einer zweiten Aufnahmestellung zum Aufnehmen einer zweiten Blisterpackung von einer zweiten Aufnahmeposition und einer zweiten Abgabestellung zum Ablegen der zweiten Blisterpackung in einer zweiten Abgabeposition, wobei der erste und der zweite Transferarm zu beiden Seiten einer Längsmittelebene der Übergabeeinheit angeordnet sind, wobei die erste und zweite Aufnahmeposition bezüglich der Längsmittelebene nach außen versetzt angeordnet sind und die erste und zweite Abgabeposition bezüglich der Längsmittelebene nach außen versetzt angeordnet sind, wobei die erste und zweite Aufnahmeposition in einer Reihe quer zur Längsmittelebene nebeneinander angeordnet sind, und wobei die erste und zweite Abgabeposition in einer Reihe quer zur Längsmittelebene nebeneinander angeordnet sind, und wobei die erste und zweite Abgabeposition um im Wesentlichen 90° oder im Wesentlichen 270° verdreht zur ersten und zweiten Aufnahmeposition angeordnet sind. Mit dieser Ausgestaltung wird eine Übergabe in zwei Linien ermöglicht, wobei gleichzeitig die Blisterpackungen um im Wesentlichen 90° oder im Wesentlichen 270° um ihre Mittelpunkte verdreht abgelegt werden.

In den beiden letztgenannten Varianten B und C sind die zweiten Segmente des ersten und zweiten Transferarms in der jeweiligen Aufnahmestellung jeweils bezüglich der Längsmittelebene schräg nach innen ausgerichtet, und die zweiten Segmente des ersten oder zweiten Transferarms sind in der jeweiligen Abgabestellung jeweils bezüglich der Längsmittelebene schräg nach innen ausgerichtet. Diese Anordnung ist besonders Platz sparend.

In einer weiteren Variante D weist die Übergabeeinheit einen ersten Transferarm, der bewegbar ist zwischen einer ersten Aufnahmestellung zum Aufnehmen einer ersten Blisterpackung von einer ersten Aufnahmeposition und einer ersten Abgabestellung zum Ablegen der ersten Blisterpackung in einer ersten Abgabeposition, und einen zweiten Transferarm auf, der bewegbar ist zwischen einer zweiten Aufnahmestellung zum Aufnehmen einer zweiten Blisterpackung von einer zweiten Aufnahmeposition und einer zweiten Abgabestellung zum Ablegen der zweiten Blisterpackung in einer zweiten Abgabeposition, wobei der erste und der zweite Transferarm entlang der ersten Achse nebeneinander angeordnet sind und identisch ausgerichtet sind, wobei die erste und zweite Aufnahmeposition in einer Reihe parallel zur ersten Achse nebeneinander angeordnet sind, und wobei die erste und zweite Abgabeposition in einer Reihe parallel zur ersten Achse nebeneinander angeordnet sind, und wobei die erste und zweite Abgabeposition um im Wesentlichen 90° oder im Wesentlichen 270° verdreht zur ersten und zweiten Aufnahmeposition angeordnet sind. Mit dieser Ausgestaltung wird eine Übergabe in zwei Linien ermöglicht, wobei gleichzeitig die Blisterpackungen um 90° oder 270° um ihre Mittelpunkte verdreht abgelegt werden, in der Ablageposition aber zudem eine identische Ausrichtung besitzen.

Bei allen Ausgestaltungen mit zwei Transferarmen nach Varianten B, C und D sind für jeden Transferarm dieselben Merkmale verwirklicht wie bei dem einzigen Transferarm der Variante A mit einem Transferarm.

Das Verfahren zum Transferieren von Blisterpackungen mittels der oben beschriebenen Übergabeeinheit von einer Aufnahmeposition zu einer Abgabeposition umfasst das wesentliche Merkmal, dass jede Blisterpackung in der Abgabeposition im Vergleich zur Aufnahmeposition mit derselben Seite nach oben, aber um im Wesentlichen 90° oder im Wesentlichen 270° um ihren Mittelpunkt gedreht abgelegt wird.

Beim Verfahren mit Variante B der Übergabeeinheit liegen die ersten und zweiten Blisterpackungen in der Abgabeposition mit derselben Seite nach oben und bilden einen bündigen Stapel, bei dem aber jede zweite Blisterpackung im Vergleich zu den übrigen Blisterpackungen um 180° gedreht ist.

Beim Verfahren mit Variante B der Übergabeeinheit vollführen der erste und zweite Transferarm bevorzugt gegenläufige hin- und hergehende Schwenkbewegungen. Auf diese Weise kann der Durchsatz der Übergabeeinheit erhöht werden und es ist sichergestellt, dass sich die beiden Transferarme nicht behindern.

Beim Verfahren mit Variante C der Übergabeeinheit liegen die ersten und zweiten Blisterpackungen in der ersten und zweiten Abgabeposition mit derselben Seite nach oben und parallel nebeneinander, sind aber jeweils mit derselben Seitenkante zueinander gewandt ausgerichtet.

Beim Verfahren mit Variante D der Übergabeeinheit liegen die ersten und zweiten Blisterpackungen in der ersten und zweiten Abgabeposition mit derselben Seite nach oben und parallel nebeneinander, wobei jeweils dieselbe Seitenkante der ersten und zweiten Blisterpackungen in dieselbe Richtung gewandt ist. Dies ist vorteilhaft, wenn die Blisterpackungen in der weiteren Verarbeitung eine identische Ausrichtung haben sollen.

Beim Verfahren mit Variante C oder D der Übergabeeinheit ist es bevorzugt, wenn der erste und zweite Transferarm gleichläufige hin- und hergehende Schwenkbewegungen vollführen. Dadurch kann der Durchsatz erhöht werden. Es ist aber auch denkbar, dass die Transferarme gegenläufige Schwenkbewegungen ausführen.

Es ist bevorzugt, dass das Halteorgan jedes Transferarms mindestens einen Saugkopf umfasst, der mittels mindestens eines Trägerarms am zweiten Segment befestigt ist. Besonders bevorzugt ist der mindestens eine Trägerarm starr an dem zweiten Segment befestigt.

Um den vom ersten Segment zu überstreichenden Winkelbereich zu reduzieren, kann der mindestens eine Trägerarm in der ersten oder zweiten Aufnahmestellung und in der ersten oder zweiten Abgabestellung vom zweiten Segment schräg nach unten abragen.

Weitere Eigenschaften und Vorteile der vorliegenden Erfindung ergeben sich aus der nachfolgenden Beschreibung unter Bezugnahme auf die Zeichnungen.
- Fig. 1 bis 4: sind schematische Perspektivansichten einer Ausführungsform der erfindungsgemäßen Übergabeeinheit, die unterschiedliche Stadien des Übergabeprozesses darstellen;
- Fig. 5: ist eine schematische Perspektivansicht der wesentlichen Antriebskomponenten eines Transferarms der Übergabeeinheit aus Fig. 1 bis 4;
- Fig. 6: ist eine Querschnittsansicht zur Darstellung des inneren Aufbaus eines Transferarms aus Fig. 1;
- Fig. 7 bis 10: sind schematische Perspektivansichten einer Variante der erfindungsgemäßen Übergabeeinheit, die unterschiedliche Stadien des Übergabeprozesses darstellen; und
- Fig. 11 bis 14: sind schematische Perspektivansichten einer weiteren Variante der erfindungsgemäßen Übergabeeinheit, die unterschiedliche Stadien des Übergabeprozesses darstellen.

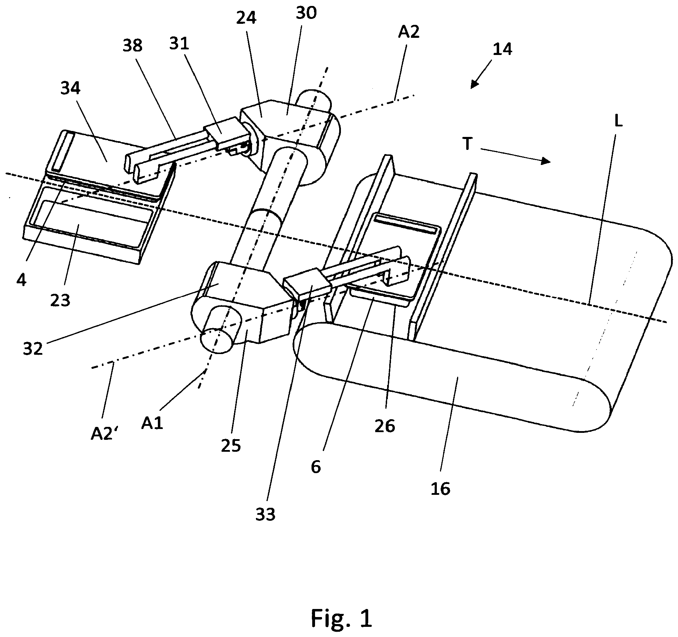

Fig. 1 bis 4 zeigt eine Übergabeeinheit 14 zum Transferieren von Blisterpackungen 4, 6. In Fig. 1 bis 4 ist die Übergabeeinheit 14 in verschiedenen Stadien des Übergabeprozesses dargestellt.

Die Übergabeeinheit 14 kann in verschiedenen Stadien des Verarbeitungsprozesses von Blisterpackungen 4, 6 eingesetzt werden, z.B. zwischen einer Zwischenablage 12 und einem Fördermittel 16 wie in den Figuren dargestellt. Die Übergabeeinheit 14 kann aber auch Blisterpackungen 4, 6 von einer Stanzstation oder einem Transportmittel an eine Zwischenablage oder an ein Fördermittel übergeben, oder von der Zwischenablage an eine andere Endablage als das Fördermittel. Die Transferrichtung der Blisterpackungen 4, 6 ist in den Figuren durch den Pfeil T gekennzeichnet.

Die Zwischenablage 12 und das Fördermittel 16 sind in den Figuren lediglich schematisch dargestellt. Das Fördermittel 16 bewegt sich vorzugsweise in Transferrichtung T. Das Fördermittel 16 kann als eine umlaufende Packgutkette ausgebildet sein, die kontinuierlich oder vorzugsweise getaktet bewegt wird. Ebenso ist es denkbar, dass das Fördermittel 16 als ein Linearmotorsystem ausgebildet ist. Wenn das Fördermittel 16 getaktet bewegt wird oder wenn die einzelnen Schlitten des umlaufenden Linearmotorsystems an der Position, an der ihnen die Blisterpackungen 4, 6 zugeführt werden, während der Übergabe stillstehen, können in den Fächern des Fördermittels 16 Stapel von zwei oder mehr aufeinander liegenden Blisterpackungen 4, 6 gebildet werden. Es ist auch denkbar, die Blisterpackungen 4, 6 nicht direkt an das Fördermittel 16, sondern zunächst an einen Speicher (nicht dargestellt) zu übergeben.

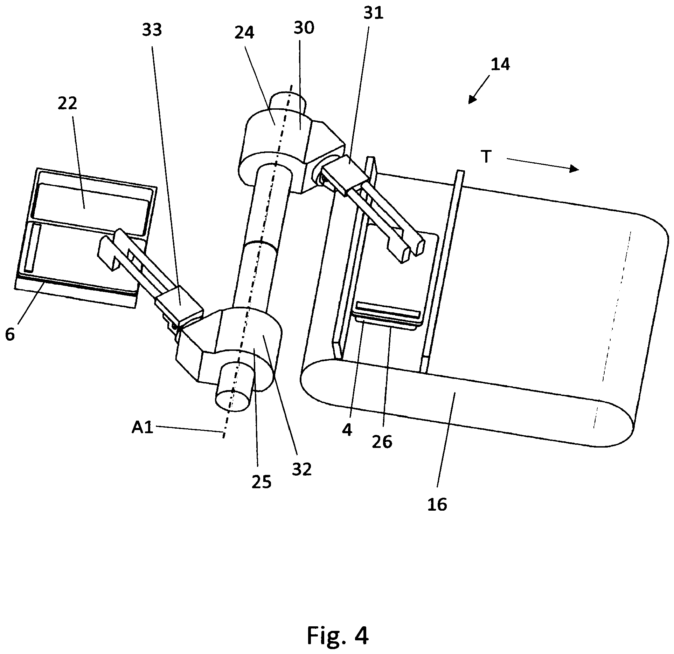

Die Übergabeeinheit 14 weist einen ersten Transferarm 24 und einen zweiten Transferarm 25 auf, die zu beiden Seiten der Längsmittelebene L der Übergabeeinheit 14 in einer Reihe nebeneinander angeordnet sind. Der erste Transferarm 24 ist bewegbar zwischen einer Aufnahmestellung (siehe Fig. 4) zum Aufnehmen der ersten Blisterpackung 4 von der ersten Aufnahmeposition 22 auf der Zwischenablage 12 und einer Abgabestellung (siehe Fig. 1) zum Ablegen der ersten Blisterpackung 4 in einer Abgabeposition 26 auf dem Fördermittel 16.

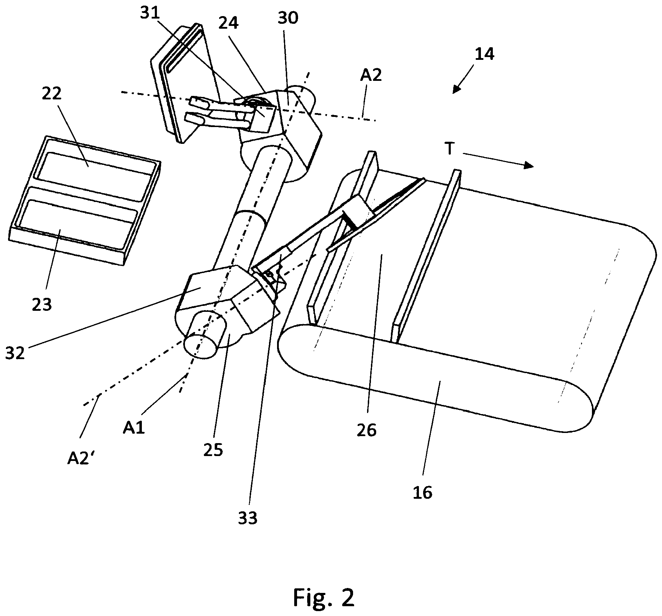

Der zweite Transferarm 25 der Übergabeeinheit 14 ist bewegbar zwischen einer Aufnahmestellung (siehe Fig. 1) zum Aufnehmen der zweiten Blisterpackung 6 von der zweiten Aufnahmeposition 23 auf der Zwischenablage 12 und einer Abgabestellung (siehe Fig. 2) zum Ablegen der zweiten Blisterpackung 6 in derselben Abgabeposition 26, in der der erste Transferarm 24 die ersten Blisterpackungen 4 ablegt.

Die beiden Transferarme 24, 25 sind vorzugsweise spiegelsymmetrisch bezüglich der Längsmittelebene L der Vorrichtung 2 angeordnet und aufgebaut. Die beiden Transferarme 24, 25 führen gegenläufige hin- und hergehende Schwenkbewegungen aus. Wenn der erste Transferarm 24 sich in der Aufnahmestellung befindet, befindet sich der zweite Transferarm 25 in seiner Abgabestellung oder zumindest in der Nähe der Abgabestellung. Wenn sich der erste Transferarm 24 in der Abgabestellung befindet, befindet sich der zweite Transferarm 25 in seiner Aufnahmestellung oder zumindest in der Nähe der Aufnahmestellung. Die Aufnahmestellung des ersten Transferarms 24 unterscheidet sich räumlich von der Aufnahmestellung des zweiten Transferarms 25. Ebenso unterscheidet sich die Abgabestellung des ersten Transferarms 24 von der Abgabestellung des zweiten Transferarms 25 aufgrund der Spiegelsymmetrie der Transferarme 24, 25 bezüglich der Längsmittelebene L.

Die erste und zweite Aufnahmeposition 22, 23 auf der Zwischenablage 12 und die gemeinsame Abgabeposition 26 auf dem Fördermittel 16 sind jeweils vorzugsweise in der Form der zu übergebenden Blisterpackungen 4, 6 ausgebildet. Bei herkömmlichen Blisterpackungen 4, 6 werden die genannten Positionen somit im Wesentlichen eine rechteckförmige Gestalt aufweisen. In der dargestellten Ausführungsform sind die Aufnahmepositionen 22, 23 jeweils derart angeordnet, dass sich die längere Seite der Positionen in Transferrichtung T erstreckt, während die Ablageposition 26 derart angeordnet ist, dass sich die längere Seite der Position quer zur Transferrichtung T erstreckt. Dies kann aber auch genau umgekehrt sein.

Wie aus Fig. 1 bis 4 ersichtlich ist, sind die erste und zweite Aufnahmeposition 22, 23 bezüglich der Längsmittelebene L nach außen versetzt angeordnet. Die gemeinsame Abgabeposition 26 ist hingegen im Bereich der Längsmittelebene L angeordnet. In der hier dargestellten bevorzugten Ausführungsform ist die gemeinsame Abgabeposition 26 derart symmetrisch zur Längsmittelebene L angeordnet, dass die Längsmittelebene L die Abgabeposition 26 mittig schneidet.

Bezug nehmend auf Fig. 1 werden nun Details der Übergabeeinheit 14 näher beschrieben. Wie aus Fig. 1 hervorgeht, weist der erste Transferarm 24 ein erstes Segment 30 und ein zweites Segment 31 auf. Das erste Segment 30 des ersten Transferarms 24 ist um eine erste Achse A1, die senkrecht zur Längsmittelebene L verläuft, drehbar befestigt. Das erste Segment des ersten Transferarms 24 weist einen Abschnitt auf, an dem das zweite Segment 31 drehbar um eine ortsveränderliche zweite Achse A2 befestigt ist. Die zweite Achse A2 verläuft zur ersten Achse A1 stets unter einem Winkel von 45° bzw. 135°. An dem zweiten Segment 31 ist ein Halteorgan 34 zum Aufnehmen und Halten der Blisterpackung 4 angeordnet.

Der zweite Transferarm 25 weist ebenfalls ein erstes Segment 32 und ein zweites Segment 33 auf. Das erste Segment 32 des zweiten Transferarms 25 ist um dieselbe erste Achse A1 drehbar befestigt. Das erste Segment 32 des zweiten Transferarms 25 weist außerdem einen Abschnitt auf, an dem das zweite Segment 33 drehbar um eine ortsveränderliche zweite Achse A2' befestigt ist. Die zweite Achse A2' verläuft zur ersten Achse A1 stets unter einem Winkel von 45° bzw. 135°. An dem zweiten Segment 33 ist ebenfalls ein Halteorgan 34 zum Aufnehmen und Halten einer Blisterpackung 6 angeordnet.

Die Transferarme 24, 25 sind derart ausgestaltet und angesteuert, dass die Bewegung der Transferarme 24, 25 von ihrer jeweiligen Aufnahmestellung zu ihrer jeweiligen Abgabestellung und zurück eine kombinierte Bewegung ist, die sich zumindest aus einer ersten Drehbewegung des ersten Segments 30, 32 und des zweiten Segments 31, 33 um die erste Achse A1 und einer zweiten Drehbewegung des zweiten Segments 31, 33 um die jeweils zugehörige zweite Achse A2, A2' zusammensetzt.

Wie aus der Zusammenschau von Fig. 1 bis 4 hervorgeht, ist die zweite Achse A2 des ersten Transferarms 24 derart angeordnet, dass sie sich während der ersten Drehbewegung um die erste Achse A1 entlang eines Abschnitts eines Kegelmantels bewegt, der die erste Aufnahmeposition 22 oder deren seitliche Projektion schräg schneidet. Die zweite Achse A2' des zweiten Transferarms 25 ist derart angeordnet, dass sie sich während der ersten Drehbewegung des zweiten Transferarms 25 um die erste Achse A1 ebenfalls entlang eines Abschnitts eines Kegelmantels bewegt, der die zweite Aufnahmeposition 23 oder deren seitliche Projektion schräg schneidet.

Zur Anpassung an unterschiedliche Formate können die Transferarme 24, 25 parallel zur ersten Achse A1 verschiebbar gelagert sein, und/oder in Längsrichtung verschiebbar sein. Bezug nehmend auf Fig. 1 bis 4 umfasst das Halteorgan 34 jedes Transferarms 24, 25 eine Saugplatte 36, die mittels eines Trägerarms 38 am zweiten Segment 31, 33 befestigt ist. Es ist auch möglich, dass stattdessen ein Saugkopf oder mehrere Saugköpfe je Halteorgan 34 vorhanden sind. Bei Vorliegen von mehreren Saugköpfen können auch mehrere separate Trägerarme 38 zur Verbindung mit dem zweiten Segment 31, 33 vorliegen. Das Halteorgan 34 ist vorzugsweise ein Formatteil, das je nach Art und Größe der zu übergebenden Blisterpackungen 4, 6 ausgetauscht werden kann. Der Trägerarm 38 ist vorzugsweise starr am zweiten Segment 31, 33 befestigt.

Wie aus Fig. 1 und 4 hervorgeht, ist das zweite Segment 31, 33 des ersten oder zweiten Transferarms 24, 25 in der jeweiligen Aufnahmestellung bezüglich der Längsmittelebene L nach innen gerichtet und erstreckt sich schräg zur Längsmittelebene L. Ebenso ist erkennbar, dass das zweite Segment 31, 33 des ersten oder zweiten Transferarms 24, 25 in der jeweiligen Abgabestellung bezüglich der Längsmittelebene L nach innen gerichtet ist und sich schräg zur Längsmittelebene L erstreckt. Die Aufnahmestellung und Abgabestellung jedes Transferarms 24, 25 ist vorzugsweise spiegelsymmetrisch bezüglich einer durch die erste Achse A1 verlaufenden senkrechten Ebene.

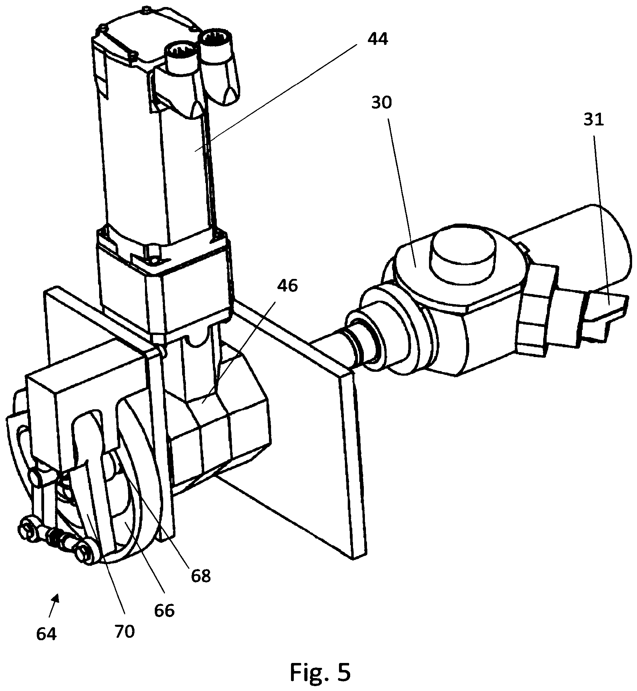

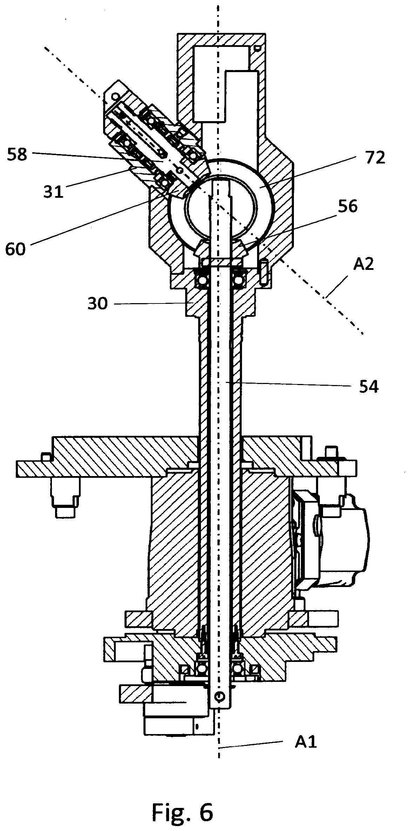

Bezug nehmend auf Fig. 5 und 6 werden nun Details eines möglichen Antriebs für den Transferarm 24 beschrieben.

In Fig. 5 ist ein Motor 44 erkennbar, der über ein Getriebe 46 das erste Segment 30 um die erste Achse A1 hin- und zurückschwenkt. Das um die zweite Achse A2 schwenkbare zweite Segment 31 ist nur abgebrochen dargestellt.

In der Querschnittsansicht nach Fig. 6 sind der Motor 44 und das Getriebe 46 nicht dargestellt. Vom Motor 44 wird das erste Segment 30 des Transferarms 24, das als Hohlwelle ausgebildet ist, angetrieben. Bei Betätigung des Motors 44 wird das erste Segment 30 um die erste Achse A1 hin- und hergeschwenkt. Im Inneren des ersten Segments 30 ist zudem eine Welle 54 angeordnet, an deren einem Ende, das dem zweiten Segment 31 zugewandt ist, ein Kegelrad 56 starr befestigt ist. Das zweite Segment 31 ist in einem Abschnitt des ersten Segments 30 um die zweite Achse A2 drehbar gelagert.

Nicht dargestellte Luftkanäle im Transferarm sind mit einem Vakuumanschluss für die Saugplatte 36 oder die Saugköpfe verbunden.

Das zweite Segment 31 umfasst eine zentrale Welle 58, die drehbar in dem Endabschnitt des ersten Segments 30 gelagert ist und sich bei einer Drehbewegung des ersten Segments 30 um die erste Achse A1 mit dem ersten Segment 30 mitdreht. Fest mit der Welle 58 ist ein weiteres Kegelrad 60 verbunden. Sowohl das Kegelrad 56 als auch das Kegelrad 60 sind in Eingriff mit einem ringförmigen Kegelrad 72, das einerseits um den Mittelpunkt des Rings drehbar im ersten Segment 31 gelagert ist und sich zudem zusammen mit dem ersten Segment 30 um die erste Achse A1 schwenken lässt. Bei einer Drehbewegung des ersten und zweiten Segments 30, 31 um die erste Achse A1 mit dem Kegelrad 56 kämmt das ringförmige Kegelrad 72 mit dem Kegelrad 56 und das zweite Kegelrad 60 kämmt entsprechend mit dem ringförmigen Kegelrad 72.

Wenn nun das erste Segment 30 und somit auch das zweite Segment 31 um die erste Achse A1 verschwenkt werden, läuft das Kegelrad 72 am unbewegten Kegelrad 56 ab und das Kegelrad 60 wird durch das Kegelrad 72 entsprechend in Bewegung gesetzt, wodurch die Welle 58 in eine Drehbewegung um die zweite Achse A2 versetzt wird. Bei einer Übersetzung von 1:1 zwischen den Kegelrädern 56, 72, 60 bringt somit eine Schwenkung des ersten Segments 30 und des zweiten Segments 31 um die erste Achse A1 um 180°, wie sie bei den in Fig. 1 bis 4 dargestellten Übergabeprozessen gewünscht ist, ebenfalls eine Drehung des zweiten Segments 31 um die zweite Achse A2 um 180° mit sich. Somit führt das zweite Segment 31 und die an dem Halteorgan 34 gehaltene Blisterpackung 4 eine Drehbewegung um die zweite Achse A2 von im Wesentlichen 180° aus, wenn sich der Transferarm 24 von seiner Aufnahmestellung zu seiner Abgabestellung oder umgekehrt bewegt. Wenn das Halteorgan 34 in der Aufnahmestellung und der Abgabestellung schräg nach unten abragt, kann das erste Segment 30 bei der Schwenkbewegung um die erste Achse A1 auch nur einen Winkelbereich von weniger als 180°, bis hin zu 120°, überstreichen. In diesem Fall müsste die Übersetzung zwischen den Kegelrädern 56, 72, 60 entsprechend angepasst werden, weil das zweite Segment 31 in jedem Fall eine Drehbewegung um die zweite Achse A2 um 180° vollziehen muss.

Die Drehbewegung des zweiten Segments 31 um die zweite Achse A2 in Kombination mit der Schwenkbewegung um die erste Achse A1 bewirkt, dass die jeweilige Blisterpackung 4 von dem Halteorgan 34 an einer flächigen Seite, vorzugsweise an einer ebenen Fläche, besonders bevorzugt einer mit einer Deckfolie ausgestatteten Seite, ergriffen und anschließend von oben in die Abgabeposition 26 abgelegt werden kann. Dabei vollzieht die Blisterpackung 4 eine 90°-Drehung bzw. 270°-Drehung um ihren Mittelpunkt.

Abweichend vom bisher dargestellten Grundprinzip ist es gewünscht, dass das zweite Segment 31 in den Endbereichen der Schwenkbewegung um die erste Achse A1 keine Drehbewegung um die zweite Achse A2 vollzieht. Dies ist darin begründet, dass für ein gezieltes Aufnehmen und Ablegen der Blisterpackungen 4 ein geradliniges Anheben und Absenken der Blisterpackungen 4 in den Endbereichen der Bewegung vorteilhaft ist. Zur Erreichung dieses Zwecks kann in der Übergabeeinheit 14 ein Mechanismus 64 zur Anpassung des Drehverlaufs des zweiten Segments 31 um die zweite Achse A2 vorgesehen sein.

Der Mechanismus 64 umfasst eine Kurvenscheibe 66, die gemeinsam mit dem ersten Segment 30 um die erste Achse A1 gedreht wird. Der Mechanismus 64 umfasst des Weiteren eine Kurvenrolle 68, die drehbar an einem Hebelmechanismus 70 angelenkt ist. Der Hebelmechanismus 70 wiederum ist mit der inneren Welle 54 starr verbunden, an deren anderem Ende das Kegelrad 56 angeordnet ist. Bei Drehung der Kurvenscheibe 66 um die erste Achse A1 läuft die Kurvenrolle 68 an der Kurvenscheibe 66 ab und bewirkt somit eine entsprechende Auslenkung des Hebelmechanismus 70, was wiederum zu einer Drehung der Welle 54 um die erste Achse A1 führt. Der Mechanismus 64 ist so gestaltet, dass sich die Welle 54 und somit das Kegelrad 56 in den Anfangs- und Endbereichen der Drehbewegung des ersten Segments 30 und somit der Kurvenscheibe 66 um die erste Achse A1 mit derselben Winkelgeschwindigkeit wie das erste Segment 30 mitbewegen. Auf diese Weise erfolgt zwischen den Kegelrädern 56, 72 und 60 keine Relativbewegung, sodass auch keine Drehbewegung des zweiten Segments 31 um die zweite Achse A2 initiiert wird.

Im weiteren Verlauf der Schwenkbewegung um die erste Achse A1 hingegen wird durch den Mechanismus 64 eine gegenläufige Bewegung der Welle 54 entgegen der Drehrichtung des ersten Segments 30 bewirkt, wodurch die Drehgeschwindigkeit des zweiten Segments 31 um die zweite Achse A2 bereichsweise schneller ist als die Drehbewegung um die erste Achse A1. Auf diese Weise gelingt es, an den Endpunkten der Schwenkbewegung um die erste Achse A1 die Drehbewegung des zweiten Segments 31 um die zweite Achse A2 auszusetzen und dies in einem Mittelbereich der Schwenkbewegung um die erste Achse A1 durch schnellere Drehung des zweiten Segments 31 um die zweite Achse A2 wieder auszugleichen. Dadurch wird gewährleistet, dass die Blisterpackungen 4 immer eine Drehbewegung um die zweite Achse A2 um 180° vollziehen.

Selbstverständlich existieren vielfältige Modifikationen der bislang beschriebenen Struktur des Transferarms 24 und des zugehörigen Antriebs. So kann beispielsweise die Kopplung zwischen der Schwenkbewegung des ersten Segments 30 um die erste Achse A1 und der Drehbewegung des zweiten Segments 31 um die zweite Achse A2 auch mittels anderer mechanischer Komponenten gelöst werden. Außerdem ist es denkbar, zwei separate Servomotoren für den Antrieb des ersten Segments 30 und des zweiten Segments 31 vorzusehen.

Der Aufbau des Transferarms 25 ist spiegelsymmetrisch zum Transferarm 24, wobei das erste Segment mit 32, das zweite Segment mit 33 und die zweite Achse mit A2' bezeichnet sind.

Bezugnehmend auf Fig. 1 bis 4 soll nun der Ablauf eines Übergabeprozesses mit der beschriebenen Übergabeeinheit 14 näher erläutert werden.

Sobald die Blisterpackungen 4, 6 in den Aufnahmepositionen 22, 23 bereitliegen, kann die erste Blisterpackung 4 dort von dem ersten Transferarm 24 der Übergabeeinheit 14 ergriffen und zur Abgabeposition 26 transferiert werden. Die erste Blisterpackung 4 wird in der ersten Aufnahmeposition 22 von oben aufgenommen und ebenfalls von oben in der Abgabeposition 26 auf das Fördermittel 16 abgelegt. Die erste Blisterpackung 4 ist dabei in der ersten Aufnahmeposition 22 bezüglich der Längsmittelebene L nach außen versetzt angeordnet und in der Abgabeposition 26 im Bereich der Längsmittelebene L angeordnet. Die erste Blisterpackung 4 wird in der Abgabeposition 26 im Vergleich zur ersten Aufnahmeposition 22 mit derselben Seite nach oben, aber um 90° oder 270° um ihren Mittelpunkt gedreht abgelegt.

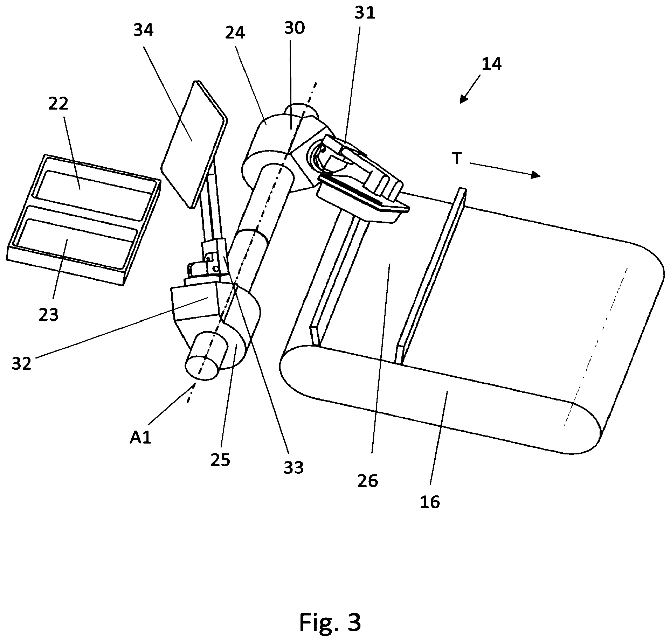

Fig. 1 zeigt die erste Blisterpackung 4 bei deren Ergreifen an der ersten Aufnahmeposition 22. Fig. 2 und 3 zeigen die erste Blisterpackung 4 auf dem Weg von der ersten Aufnahmeposition 22 zur Abgabeposition 26, wo sie bei dem in Fig. 4 dargestellten Zeitpunkt abgelegt wird. Nach dem Ablegevorgang wird der erste Transferarm 24 wieder in seine Aufnahmestellung bewegt (siehe Fig. 1) und der Zyklus beginnt von vorne. Der Vorgang wird so oft wiederholt wie gewünscht.

Für die Übergabe der zweiten Blisterpackung 6 aus der zweiten Aufnahmeposition 23 hin zur gemeinsamen Abgabeposition 26 mittels des zweiten Transferarms 25 gelten exakt dieselben Aussagen wie für die Übergabe der ersten Blisterpackung 4 mittels des ersten Transferarms 24. Lediglich die Zeitpunkte des Aufnehmens der Blisterpackung 6 und des Ablegens der Blisterpackung 6 sind im Wesentlichen gegenläufig zu den Zeitpunkten, an denen die erste Blisterpackung 4 aufgenommen und abgelegt wird. Die beiden Transferarme 24, 25 vollziehen eine Schwenkbewegung um dieselbe erste Achse A1, während die Drehbewegungen ihrer zweiten Segmente 31, 33 um die jeweilige zweite Achse A2, A2' zueinander entgegengesetzte Drehrichtungen zeigen.

Insgesamt kommen die ersten und zweiten Blisterpackungen 4, 6 in der Abgabeposition 26 mit derselben Seite nach oben zu liegen und bilden einen bündigen Stapel, bei dem aber jede zweite Blisterpackung 4, 6 im Vergleich zu den übrigen Blisterpackungen 4, 6 um 180° gedreht ist.

An den Aufnahmepositionen 22, 23 werden die Blisterpackungen 4, 6 allgemein jeweils bevorzugt mittels einer geeigneten Halterung festgehalten, bis sie von den Transferarmen 24, 25 ergriffen wurden. Die Halterung muss die Blisterpackungen 4, 6 rechtzeitig vor der Transferbewegung freigeben.

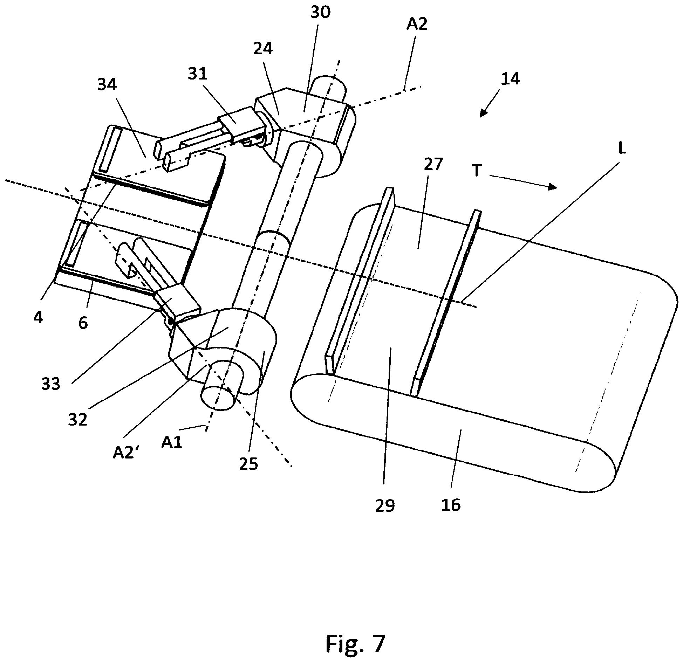

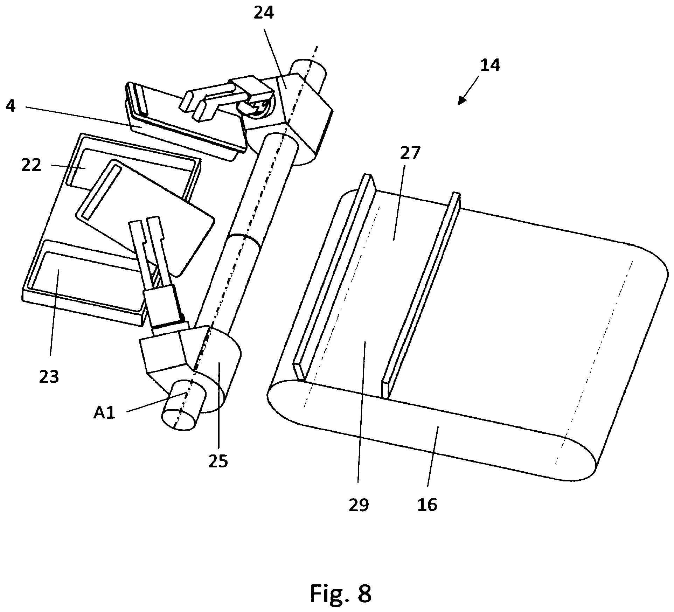

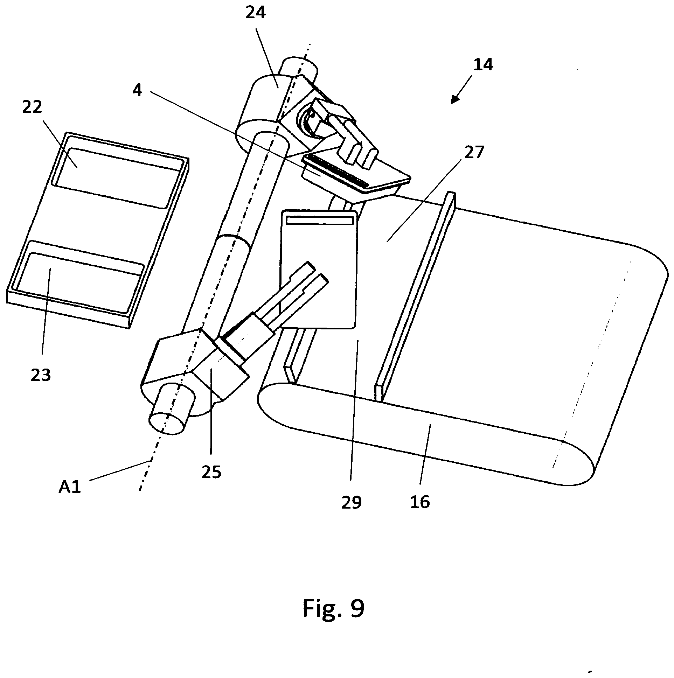

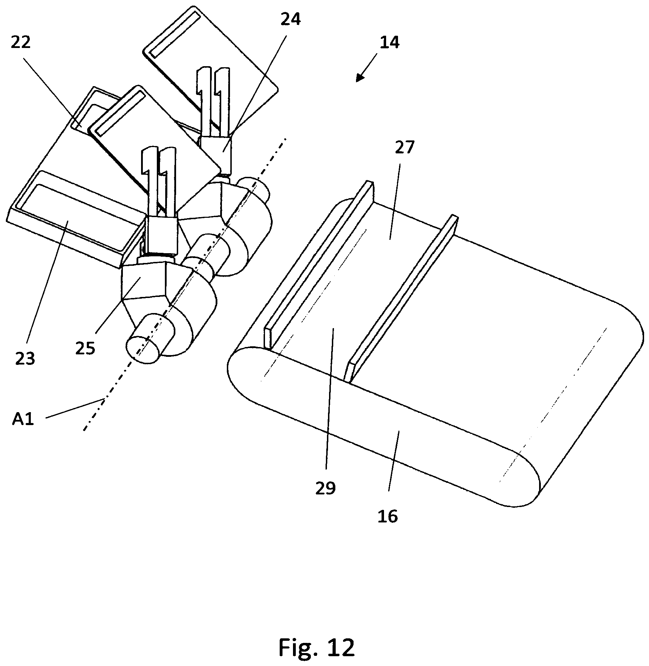

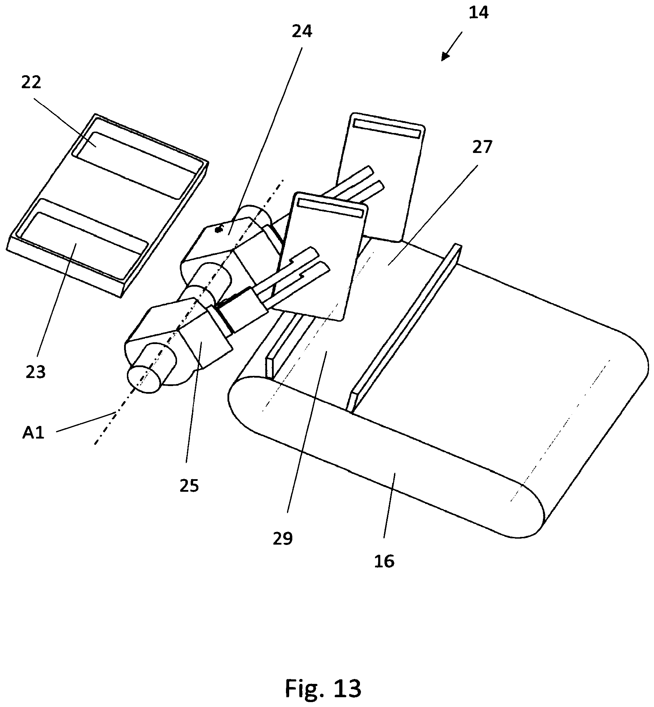

In Fig. 7 bis 10 und 11 bis 14 sind zwei weitere Ausführungsformen der Übergabeeinheit 14 beschrieben. Sofern keine anders lautenden Angaben gemacht werden, sind alle Details zum Aufbau und der Funktionsweise der Ausführungsform aus Fig. 1 bis 6 auch hier anwendbar.

Die Ausführungsform nach Fig. 7 bis 10 unterscheidet sich von der Ausführungsform nach Fig. 1 bis 4 dadurch, dass die beiden Transferarme 24, 25 einen größeren Abstand zueinander besitzen und somit die an den Aufnahmepositionen 22, 23 aufgenommenen Blisterpackungen 4, 6 an zwei unterschiedlichen Abgabepositionen 27, 29 abgelegt werden. Die beiden Abgabepositionen 27, 29 sind in eine Reihe quer zur Längsmittelebene L nebeneinander angeordnet, wobei jede der Abgabepositionen 27, 29 um 90° oder 270° verdreht zur ersten und zweiten Aufnahmeposition 22, 23 angeordnet ist.

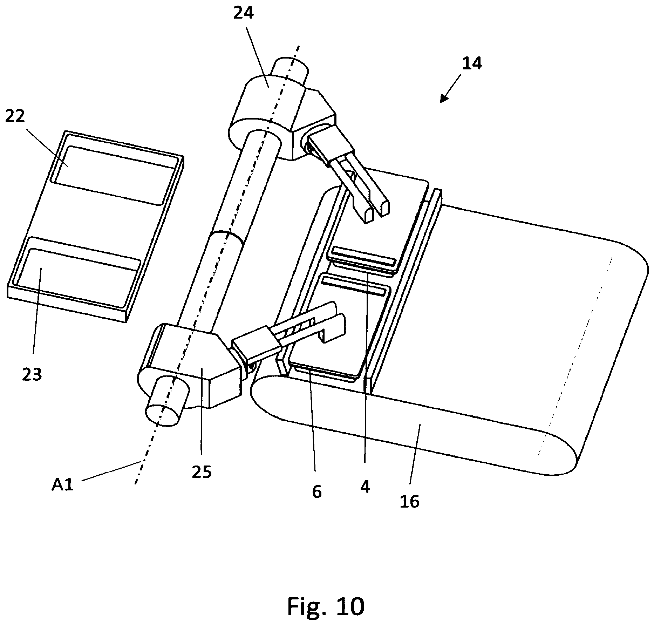

Die ersten und zweiten Blisterpackungen 4, 6 kommen in der ersten und zweiten Abgabeposition 27, 29 mit derselben Seite nach oben und parallel nebeneinander zu liegen, sind aber jeweils mit derselben Seitenkante zueinander gewandt ausgerichtet. Mit anderen Worten werden die Blisterpackungen 4, 6 jeweils in unterschiedliche Richtungen um ihre Mittelpunkte verdreht, und kommen somit, wie aus der Zusammenschau der Fig. 7 und Fig. 10 hervorgeht (siehe die länglichen Kennzeichnungsmerkmale einer schmalen Seite) in umgekehrter Ausrichtung zu liegen, abhängig vom Drehsinn des jeweiligen Transferarms 24, 25.

Vorzugsweise vollführen der erste und zweite Transferarm 24, 25 in dieser Ausführungsform gleichläufige hin- und hergehende Schwenkbewegungen.

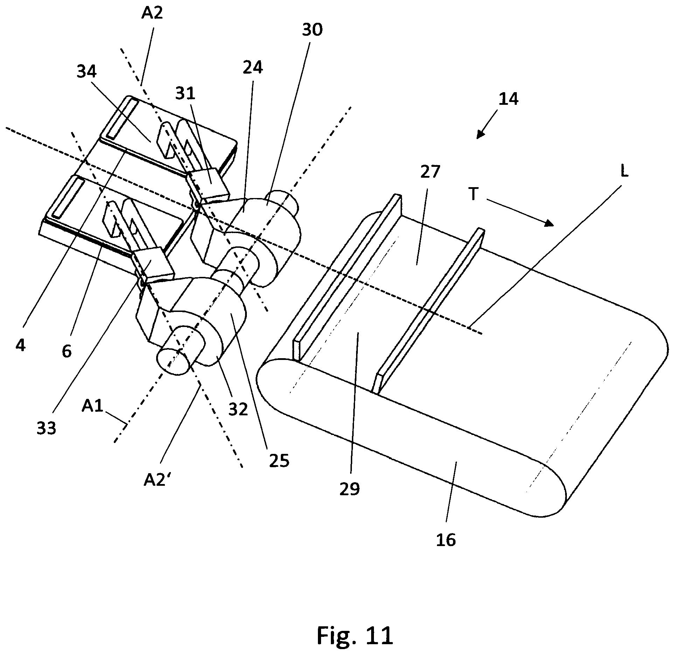

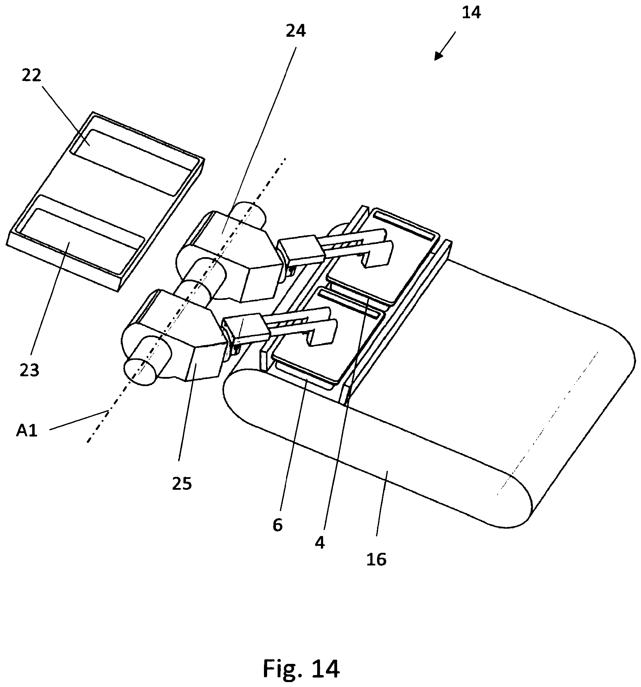

Die Ausführungsform nach Fig. 11 bis 14 unterscheidet sich von der Ausführungsform gemäß Fig. 7 bis 10 dadurch, dass die beiden Transferarme 24, 25 in vollständig identischer Ausrichtung nebeneinander parallel zur ersten Achse A1 angeordnet sind. Somit ist der Bewegungsablauf der beiden Transferarme 24, 25 jeweils komplett identisch und die ersten und zweiten Blisterpackungen 4, 6 kommen in den Abgabepositionen 27, 29 mit derselben Seite nach oben und parallel nebeneinander zu liegen, wobei zudem jeweils dieselbe Seitenkante der ersten und zweiten Blisterpackungen 4, 6 in dieselbe Richtung gewandt ist. Im dargestellten Beispielsfall erkennt man dies in Fig. 14 wiederum an den länglichen Kennzeichnungsmerkmalen einer schmalen Seite. Auch in dieser Ausführungsform ist es bevorzugt, wenn die Transferarme 24, 25 gleichläufige hin- und hergehende Schwenkbewegungen vollführen.

Die Blisterpackungen 4, 6 enthalten in der Regel Tabletten, Kapseln oder Dragees. Die Blisterpackungen 4, 6 sind meist mit einer ebenen Deckfolie verschlossen, an der Halteorgan 34 angreifen kann. Es ist aber auch denkbar, dass die Blisterpackungen 4, 6 nach oben offen bleiben. Dies ist besonders dann möglich, wenn nicht Tabletten, sondern andere medizinische Produkte wie Spritzen, Ampullen, Vials oder dergleichen verpackt wurden. Bei einer Blisterverpackung 4, 6 ohne Deckfolie ist es vorteilhaft, wenn Saugköpfe an die Form der Produkte angepasst werden und direkt an den in den Blisternäpfen fixierten Produkten angreifen. Die Blisterpackungen 4, 6 können auch nicht-medizinische Produkte enthalten.

Alternativ können auch Greifköpfe mit Greifern als Halteköpfe verwendet werden. Dies ist besonders bei schwereren Produkten oder bei nach oben offenen Blisterpackungen 4, 6 eine sinnvolle Option. In diesem Fall kann die Luftzufuhr zu den Halteorganen 34 entfallen. Neben der beschriebenen Ausgestaltung ist es für alle Ausführungsformen auch denkbar, dass die Übergabeeinheit 14 einen umgekehrten Prozess durchläuft, d.h. die Blisterpackungen 4, 6 an den Positionen 26 bzw. 27, 29 aufgenommen und zu den Positionen 22, 23 transportiert werden.

Alle Ausführungsformen der Übergabeeinheit 14 können erfindungsgemäß auch mit nur jeweils einem der beiden Transferarme 24, 25 ausgestattet sein. Dann erfolgt nur eine Übergabe jeweils einer Blisterverpackung 4 zu einem gegebenen Zeitpunkt.

## Patentansprüche

1. Übergabeeinheit (14) zum Transferieren von Blisterpackungen (4, 6) mit mindestens einem Transferarm (24, 25), der bewegbar ist zwischen einer Aufnahmestellung zum Aufnehmen einer Blisterpackung (4, 6) von einer Aufnahmeposition (22, 23) und einer Abgabestellung zum Ablegen der Blisterpackung (4, 6) in einer Abgabeposition (26, 27, 29),
wobei der mindestens eine Transferarm (24, 25) ein erstes Segment (30, 32) und ein zweites Segment (31, 33) aufweist, wobei das erste Segment (30, 32) um eine erste Achse (A1), die zwischen der Aufnahmeposition (22, 23) und der Abgabeposition (26, 27, 29) angeordnet ist, drehbar befestigt ist,
wobei an dem zweiten Segment (31, 33) ein Halteorgan (34) zum Aufnehmen und Halten einer Blisterpackung (4, 6) angeordnet ist,
wobei der mindestens eine Transferarm (24, 25) derart ausgestaltet und angesteuert ist, dass die Bewegung des mindestens einen Transferarms (24, 25) von der Aufnahmestellung zur Abgabestellung und zurück eine kombinierte Bewegung ist, die sich zumindest aus einer ersten Drehbewegung des ersten Segments (30, 32) und des zweiten Segments (31, 33) um die erste Achse (A1) und einer zweiten Drehbewegung des zweiten Segments (31, 33) um die zweite Achse (A2, A2') zusammensetzt,
wobei der mindestens eine Transferarm (24, 25) derart ausgestaltet und angesteuert ist, dass die Blisterpackung (4, 6) von dem Halteorgan (34) des mindestens einen Transferarms (24, 25) an der Aufnahmeposition (22, 23) mit einer flächigen Seite der Blisterpackung (4, 6) nach oben gerichtet von oben aufgenommen wird und an der Abgabeposition (26, 27, 29) mit derselben flächigen Seite nach oben gerichtet von oben abgelegt wird, **dadurch gekennzeichnet, dass** das erste Segment (30, 32) einen Abschnitt aufweist, an dem das zweite Segment (31, 33) drehbar um eine unter einem Winkel von im Wesentlichen 45° oder im Wesentlichen 135° zur ersten Achse (A1) angeordnete ortsveränderliche zweite Achse (A2, A2') befestigt ist und dass die Abgabeposition (26, 27, 29) um im Wesentlichen 90° oder im Wesentlichen 270° verdreht zur Aufnahmeposition (22, 23) angeordnet ist.

2. Übergabeeinheit (14) nach Anspruch 1, **dadurch gekennzeichnet, dass** das zweite Segment (31, 33) und somit die am Halteorgan (34) gehaltene Blisterpackung (4, 6) eine Drehbewegung um die zweite Achse (A2, A2') von im Wesentlichen 180° ausführt, wenn sich der mindestens eine Transferarm (24, 25) von der Aufnahmestellung zur Abgabestellung oder umgekehrt bewegt.

3. Übergabeeinheit (14) nach einem der vorhergehenden Ansprüche, **dadurch gekennzeichnet, dass** das erste Segment (30, 32) eine Drehbewegung um die erste Achse (A1) von 120° bis 180° ausführt, wenn sich der mindestens eine Transferarm (24, 25) von der Aufnahmestellung zur Abgabestellung oder umgekehrt bewegt.

4. Übergabeeinheit (14) nach einem der vorhergehenden Ansprüche, **dadurch gekennzeichnet, dass** sich die zweite Achse (A2, A2') entlang eines Kegelmantelabschnitts bewegt, wenn sich der mindestens eine Transferarm (24, 25) von der Aufnahmestellung zur Abgabestellung oder umgekehrt bewegt.

5. Übergabeeinheit (14) nach einem der vorhergehenden Ansprüche, **dadurch gekennzeichnet, dass** der mindestens eine Transferarm (24, 25) parallel zur ersten Achse (A1) verschiebbar gelagert ist.

6. Übergabeeinheit (14) nach einem der vorhergehenden Ansprüche, **dadurch gekennzeichnet, dass** die Übergabeeinheit (14) aufweist:
einen ersten Transferarm (24), der bewegbar ist zwischen einer ersten Aufnahmestellung zum Aufnehmen einer ersten Blisterpackung (4) von einer ersten Aufnahmeposition (22) und einer ersten Abgabestellung zum Ablegen der ersten Blisterpackung (4) in einer Abgabeposition (26), und
einen zweiten Transferarm (25), der bewegbar ist zwischen einer zweiten Aufnahmestellung zum Aufnehmen einer zweiten Blisterpackung (6) von einer zweiten Aufnahmeposition (23) und einer zweiten Abgabestellung zum Ablegen der zweiten Blisterpackung (6) in derselben Abgabeposition (26),
wobei der erste und der zweite Transferarm (24, 25) zu beiden Seiten einer Längsmittelebene (L) der Übergabeeinheit (14) angeordnet sind,
wobei die erste und zweite Aufnahmeposition (22, 23) bezüglich der Längsmittelebene (L) nach außen versetzt angeordnet sind und die Abgabeposition (26) im Bereich der Längsmittelebene (L) angeordnet ist, wobei die erste und zweite Aufnahmeposition (22, 23) in einer Reihe quer zur Längsmittelebene (L) nebeneinander angeordnet sind, und wobei die Abgabeposition (26) um im Wesentlichen 90° oder im Wesentlichen 270° verdreht zur ersten und zweiten Aufnahmeposition (22, 23) angeordnet ist.

7. Übergabeeinheit (14) nach einem der Ansprüche 1 bis 5, **dadurch gekennzeichnet, dass** die Übergabeeinheit (14) aufweist:
einen ersten Transferarm (24), der bewegbar ist zwischen einer ersten Aufnahmestellung zum Aufnehmen einer ersten Blisterpackung (4) von einer ersten Aufnahmeposition (22) und einer ersten Abgabestellung zum Ablegen der ersten Blisterpackung (4) in einer ersten Abgabeposition (27), und
einen zweiten Transferarm (25), der bewegbar ist zwischen einer zweiten Aufnahmestellung zum Aufnehmen einer zweiten Blisterpackung (6) von einer zweiten Aufnahmeposition (23) und einer zweiten Abgabestellung zum Ablegen der zweiten Blisterpackung (6) in einer zweiten Abgabeposition (29),
wobei der erste und der zweite Transferarm (24, 25) zu beiden Seiten einer Längsmittelebene (L) der Übergabeeinheit (14) angeordnet sind,
wobei die erste und zweite Aufnahmeposition (22, 23) bezüglich der Längsmittelebene (L) nach außen versetzt angeordnet sind und die erste und zweite Abgabeposition (27, 29) bezüglich der Längsmittelebene (L) nach außen versetzt angeordnet sind, wobei die erste und zweite Aufnahmeposition (22, 23) in einer Reihe quer zur Längsmittelebene (L) nebeneinander angeordnet sind, und wobei die erste und zweite Abgabeposition (27, 29) in einer Reihe quer zur Längsmittelebene (L) nebeneinander angeordnet sind, und wobei die erste und zweite Abgabeposition (27, 29) um im Wesentlichen 90° oder im Wesentlichen 270° verdreht zur ersten und zweiten Aufnahmeposition (22, 23) angeordnet sind.

8. Übergabeeinheit (14) nach Anspruch 6 oder 7, **dadurch gekennzeichnet, dass** die zweiten Segmente (31, 33) des ersten und zweiten Transferarms (24, 25) in der jeweiligen Aufnahmestellung jeweils bezüglich der Längsmittelebene (L) schräg nach innen ausgerichtet sind, und dass die zweiten Segmente (31, 33) des ersten oder zweiten Transferarms (24, 25) in der jeweiligen Abgabestellung jeweils bezüglich der Längsmittelebene (L) schräg nach innen ausgerichtet sind.

9. Übergabeeinheit (14) nach einem der Ansprüche 1 bis 5, **dadurch gekennzeichnet, dass** die Übergabeeinheit (14) aufweist:
einen ersten Transferarm (24), der bewegbar ist zwischen einer ersten Aufnahmestellung zum Aufnehmen einer ersten Blisterpackung (4) von einer ersten Aufnahmeposition (22) und einer ersten Abgabestellung zum Ablegen der ersten Blisterpackung (4) in einer ersten Abgabeposition (27), und
einen zweiten Transferarm (25), der bewegbar ist zwischen einer zweiten Aufnahmestellung zum Aufnehmen einer zweiten Blisterpackung (6) von einer zweiten Aufnahmeposition (23) und einer zweiten Abgabestellung zum Ablegen der zweiten Blisterpackung (6) in einer zweiten Abgabeposition (29),
wobei der erste und der zweite Transferarm (24, 25) entlang der ersten Achse (A1) nebeneinander angeordnet sind und identisch ausgerichtet sind,
wobei die erste und zweite Aufnahmeposition (22, 23) in einer Reihe parallel zur ersten Achse (A1) nebeneinander angeordnet sind, und wobei die erste und zweite Abgabeposition (27, 29) in einer Reihe parallel zur ersten Achse (A1) nebeneinander angeordnet sind, und wobei die erste und zweite Abgabeposition (27, 29) um im Wesentlichen 90° oder im Wesentlichen 270° verdreht zur ersten und zweiten Aufnahmeposition (22, 23) angeordnet sind.

10. Verfahren zum Transferieren von Blisterpackungen (4, 6) mittels der Übergabeeinheit (14) gemäß einem der vorangehenden Ansprüche von einer Aufnahmeposition (22, 23) zu einer Abgabeposition (26, 27, 29), wobei jede Blisterpackung (4, 6) in der Abgabeposition (26, 27, 29) im Vergleich zur Aufnahmeposition (22, 23) mit derselben Seite nach oben, aber um im Wesentlichen 90° oder im Wesentlichen 270° um ihren Mittelpunkt gedreht abgelegt wird.

11. Verfahren zum Transferieren von Blisterpackungen (4, 6) nach Anspruch 10, rückbezogen auf Anspruch 6, wobei die ersten und zweiten Blisterpackungen (4, 6) in der Abgabeposition (26) mit derselben Seite nach oben liegen und einen bündigen Stapel bilden, bei dem aber jede zweite Blisterpackung (4, 6) im Vergleich zu den übrigen Blisterpackungen (4, 6) um 180° gedreht ist.

12. Verfahren zum Transferieren von Blisterpackungen (4, 6) nach Anspruch 11, wobei der erste und zweite Transferarm (24, 25) gegenläufige hin- und hergehende Schwenkbewegungen vollführen.

13. Verfahren zum Transferieren von Blisterpackungen (4, 6) nach Anspruch 10, rückbezogen auf Anspruch 7, wobei die ersten und zweiten Blisterpackungen (4, 6) in der ersten und zweiten Abgabeposition (27, 29) mit derselben Seite nach oben und parallel nebeneinander liegen, aber jeweils mit derselben Seitenkante zueinander gewandt ausgerichtet sind.

14. Verfahren zum Transferieren von Blisterpackungen (4, 6) nach Anspruch 10, rückbezogen auf Anspruch 9, wobei die ersten und zweiten Blisterpackungen (4, 6) in der ersten und zweiten Abgabeposition (27, 29) mit derselben Seite nach oben und parallel nebeneinander liegen, wobei jeweils dieselbe Seitenkante der ersten und zweiten Blisterpackungen (4, 6) in dieselbe Richtung gewandt ist.

15. Verfahren zum Transferieren von Blisterpackungen (4, 6) nach Anspruch 13 oder 14, wobei der erste und zweite Transferarm (24, 25) gleichläufige hin- und hergehende Schwenkbewegungen vollführen.

## Claims

1. Transfer unit (14) for transferring blister packs (4, 6),
having at least one transfer arm (24, 25), which can be moved between a receiving location for receiving a blister pack (4, 6) from a receiving position (22, 23) and a discharging location for setting down the blister pack (4, 6) in a discharging position (26, 27, 29),
wherein the at least one transfer arm (24, 25) has a first segment (30, 32) and a second segment (31, 33), wherein the first segment (30, 32) is fastened such that it can be rotated about a first axis (A1), which is arranged between the receiving position (22, 23) and the discharging position (26, 27, 29), wherein a retaining device (34) for receiving and retaining a blister pack (4, 6) is arranged on the second segment (31, 33),
wherein the at least one transfer arm (24, 25) is configured and activated such that the movement of the at least one transfer arm (24, 25) from the receiving location to the discharging location, and back, is a combined movement which is made up at least of a first rotary movement of the first segment (30, 32) and of the second segment (31, 33) about the first axis (A1) and of a second rotary movement of the second segment (31, 33) about the second axis (A2, A2'),
wherein the at least one transfer arm (24, 25) is configured and activated such that, in the receiving position (22, 23), the retaining device (34) of the at least one transfer arm (24, 25) receives the blister pack (4, 6) from above, with a flat side of the blister pack (4, 6) directed upwards, and, in the discharging position (26, 27, 29), sets down the same from above, with the same flat side directed upwards,
**characterized in that** the first segment (30, 32) has a portion on which the second segment (31, 33) is fastened such that it can be rotated about a second axis (A2, A2') which can be altered in location and is arranged at an angle of essentially 45° or essentially 135° in relation the first axis (A1), and **in that** the discharging position (26, 27, 29) is arranged in a state in which has been rotated through essentially 90° or essentially 270° in relation to the receiving position (22, 23).

2. Transfer unit (14) according to Claim 1, **characterized in that** the second segment (31, 33), and therefore the blister pack (4, 6) retained on the retaining device (34), executes a rotary movement of essentially 180° about the second axis (A2, A2') when the at least one transfer arm (24, 25) moves from the receiving location to the discharging location, or vice versa.

3. Transfer unit (14) according to either of the preceding claims, **characterized in that** the first segment (30, 32) executes a rotary movement of 120° to 180° about the first axis (A1) when the at least one transfer arm (24, 25) moves from the receiving location to the discharging location, or vice versa.

4. Transfer unit (14) according to one of the preceding claims, **characterized in that** the second axis (A2, A2') moves along part of a cone surface when the at least one transfer arm (24, 25) moves from the receiving location to the discharging location, or vice versa.

5. Transfer unit (14) according to one of the preceding claims, **characterized in that** the at least one transfer arm (24, 25) is mounted such that it can be displaced parallel to the first axis (A1).

6. Transfer unit (14) according to one of the preceding claims, **characterized in that** the transfer unit (14) has:
a first transfer arm (24), which can be moved between a first receiving location for receiving a first blister pack (4) from a first receiving position (22) and a first discharging location for setting down the first blister pack (4) in a discharging position (26), and
a second transfer arm (25), which can be moved between a second receiving location for receiving a second blister pack (6) from a second receiving position (23) and a second discharging location for setting down the second blister pack (6) in the same discharging position (26),
wherein the first and the second transfer arms (24, 25) are arranged on either side of a longitudinal centre plane (L) of the transfer unit (14),
wherein the first and second receiving positions (22, 23) are offset outwards in relation to the longitudinal centre plane (L) and the discharging position (26) is arranged in the region of the longitudinal centre plane (L), wherein the first and second receiving positions (22, 23) are arranged one beside the other in a row in a direction transverse to the longitudinal centre plane (L), and wherein the discharging position (26) is arranged in a state in which it has been rotated through essentially 90° or essentially 270° in relation to the first and second receiving positions (22, 23).

7. Transfer unit (14) according to one of Claims 1 to 5, **characterized in that** the transfer unit (14) has:
a first transfer arm (24), which can be moved between a first receiving location for receiving a first blister pack (4) from a first receiving position (22) and a first discharging location for setting down the first blister pack (4) in a first discharging position (27), and
a second transfer arm (25), which can be moved between a second receiving location for receiving a second blister pack (6) from a second receiving position (23) and a second discharging location for setting down the second blister pack (6) in a second discharging position (29),
wherein the first and the second transfer arms (24, 25) are arranged on either side of a longitudinal centre plane (L) of the transfer unit (14),
wherein the first and second receiving positions (22, 23) are offset outwards in relation to the longitudinal centre plane (L) and the first and second discharging positions (27, 29) are offset outwards in relation to the longitudinal centre plane (L), wherein the first and second receiving positions (22, 23) are arranged one beside one another in a row in the direction transverse to the longitudinal centre plane (L), and wherein the first and second discharging positions (27, 29) are arranged one beside the other in a row in a direction transverse to the longitudinal centre plane (L), and wherein the first and second discharging positions (27, 29) are arranged in a state in which they have been rotated through essentially 90° or essentially 270° in relation to the first and second receiving positions (22, 23).

8. Transfer unit (14) according to Claim 6 or 7, **characterized in that**, in the respective receiving location, the second segments (31, 33) of the first and second transfer arms (24, 25) are oriented obliquely inwards in each case in relation to the longitudinal centre plane (L), and **in that**, in the respective discharging location, the second segments (31, 33) of the first or second transfer arm (24, 25) are oriented obliquely inwards in each case in relation to the longitudinal centre plane (L).

9. Transfer unit (14) according to one of Claims 1 to 5, **characterized in that** the transfer unit (14) has:
a first transfer arm (24), which can be moved between a first receiving location for receiving a first blister pack (4) from a first receiving position (22) and a first discharging location for setting down the first blister pack (4) in a first discharging position (27), and
a second transfer arm (25), which can be moved between a second receiving location for receiving a second blister pack (6) from a second receiving position (23) and a second discharging location for setting down the second blister pack (6) in a second discharging position (29),
wherein the first and the second transfer arms (24, 25) are arranged one beside the other along the first axis (A1) and are oriented in an identical manner, wherein the first and second receiving positions (22, 23) are arranged one beside the other in a row parallel to the first axis (A1), and wherein the first and second discharging positions (27, 29) are arranged one beside the other in a row parallel to the first axis (A1), and wherein the first and second discharging positions (27, 29) are arranged in a state in which they have been rotated through essentially 90° or essentially 270° in relation to the first and second receiving positions (22, 23).

10. Method for transferring blister packs (4, 6) from a receiving position (22, 23) to a discharging position (26, 27, 29) by means of the transfer unit (14) according to one of the preceding claims, wherein in the discharging position (26, 27, 29), in comparison with the receiving position (22, 23), each blister pack (4, 6) is set down with the same side upwards, but in a state in which it has been rotated through essentially 90° or essentially 270° about its centre point.

11. Method for transferring blister packs (4, 6) according to Claim 10, with reference back to Claim 6, wherein, in the discharging position (26), the first and second blister packs (4, 6) are located with the same side upwards and form a flush stack, albeit one in which every second blister pack (4, 6) has been rotated through 180° in comparison with the rest of the blister packs (4, 6).

12. Method for transferring blister packs (4, 6) according to Claim 11, wherein the first and second transfer arms (24, 25) perform back and forth pivoting movements in different directions.

13. Method for transferring blister packs (4, 6) according to Claim 10, with reference back to Claim 7, wherein, in the first and second discharging positions (27, 20), the first and second blister packs (4, 6) are located parallel one beside the other and with the same side upwards, but in each case with the same side edges oriented so as to face one another.

14. Method for transferring blister packs (4, 6) according to Claim 10, with reference back to Claim 9, wherein, in the first and second discharging positions (27, 29), the first and second blister packs (4, 6) are located parallel one beside the other with the same side upwards, wherein in each case the same side edge of the first and second blister packs (4, 6) faces in the same direction.

15. Method for transferring blister packs (4, 6) according to Claim 13 or 14, wherein the first and second transfer arms (24, 25) perform back and forth pivoting movements in the same direction.

## Revendications

1. Unité de transfert (14) permettant le transfert d'emballages-coques (4, 6) avec au moins un bras de transfert (24, 25), qui est mobile entre une position de réception permettant la réception d'un emballage-coque (4, 6) à partir d'un emplacement de réception (22, 23) et une position de distribution permettant la dépose de l'emballage-coque (4, 6) dans un emplacement de distribution (26, 27, 29),
dans laquelle l'au moins un bras de transfert (24, 25) présente un premier segment (30, 32) et un deuxième segment (31, 33), dans laquelle le premier segment (30, 32) est fixé de manière à pouvoir tourner autour d'un premier axe (A1), qui est disposé entre l'emplacement de réception (22, 23) et l'emplacement de distribution (26, 27, 29),
dans laquelle un organe de retenue (34) permettant la réception et la retenue d'un emballage-coque (4, 6) est disposé sur le deuxième segment (31, 33),
dans laquelle l'au moins un bras de transfert (24, 25) est conçu et commandé de telle sorte que le mouvement de l'au moins un bras de transfert (24, 25) de la position de réception vers la position de distribution et inversement est un mouvement combiné qui se compose au moins d'un premier mouvement de rotation du premier segment (30, 32) et du deuxième segment (31, 33) autour du premier axe (A1) et d'un deuxième mouvement de rotation du deuxième segment (31, 33) autour du deuxième axe (A2, A2'),
dans laquelle l'au moins un bras de transfert (24, 25) est conçu et commandé de telle sorte que l'emballage-coque (4, 6) est reçu par le haut, avec une face plane de l'emballage-coque (4, 6) dirigée vers le haut, sur l'emplacement de réception (22, 23), et déposé par le haut, avec la même face plane dirigée vers le haut, sur l'emplacement de distribution (26, 27, 29), par l'organe de retenue (34) de l'au moins un bras de transfert (24, 25), **caractérisée en ce que** le premier segment (30, 32) présente une partie sur laquelle le deuxième segment (31, 33) est fixé de manière à pouvoir tourner autour d'un deuxième axe (A2, A2') déplaçable disposé selon un angle de sensiblement 45° ou sensiblement 135° par rapport au premier axe (A1) et **en ce que**
l'emplacement de distribution (26, 27, 29) est disposé de manière tournée de sensiblement 90° ou sensiblement 270° par rapport à l'emplacement de réception (22, 23).

2. Unité de transfert (14) selon la revendication 1, **caractérisée en ce que** le deuxième segment (31, 33) et donc l'emballage-coque (4, 6) retenu sur l'organe de retenue (34) effectue un mouvement de rotation autour du deuxième axe (A2, A2') de sensiblement 180°, lorsque l'au moins un bras de transfert (24, 25) se déplace de la position de réception vers la position de distribution ou inversement.

3. Unité de transfert (14) selon l'une quelconque des revendications précédentes, **caractérisée en ce que** le premier segment (30, 32) effectue un mouvement de rotation autour du premier axe (A1) de 120° à 180°, lorsque l'au moins un bras de transfert (24, 25) se déplace de la position de réception vers la position de distribution ou inversement.

4. Unité de transfert (14) selon l'une quelconque des revendications précédentes, **caractérisée en ce que** le deuxième axe (A2, A2') se déplace le long d'une partie d'enveloppe conique, lorsque l'au moins un bras de transfert (24, 25) se déplace de la position de réception vers la position de distribution ou inversement.

5. Unité de transfert (14) selon l'une quelconque des revendications précédentes, **caractérisée en ce que** l'au moins un bras de transfert (24, 25) est monté de manière à pouvoir coulisser parallèlement au premier axe (A1).

6. Unité de transfert (14) selon l'une quelconque des revendications précédentes, **caractérisée en ce que** l'unité de transfert (14) présente :
un premier bras de transfert (24) qui est mobile entre une première position de réception permettant la réception d'un premier emballage-coque (4) à partir d'un premier emplacement de réception (22) et une première position de distribution permettant la dépose du premier emballage-coque (4) dans un emplacement de distribution (26) et
un deuxième bras de transfert (25) qui est mobile entre une deuxième position de réception permettant la réception d'un deuxième emballage-coque (6) à partir d'un deuxième emplacement de réception (23) et une deuxième position de distribution permettant la dépose du deuxième emballage-coque (6) dans le même emplacement de distribution (26),
unité dans laquelle le premier et le deuxième bras de transfert (24, 25) sont disposés des deux côtés d'un plan médian longitudinal (L) de l'unité de transfert (14),
dans laquelle les premier et deuxième emplacements de réception (22, 23) sont disposés de manière décalée vers l'extérieur par rapport au plan médian longitudinal (L) et l'emplacement de distribution (26) est disposé dans la zone du plan médian longitudinal (L), dans laquelle les premier et deuxième emplacements de réception (22, 23) sont disposés l'un à côté de l'autre en rang transversalement au plan médian longitudinal (L), et dans laquelle l'emplacement de distribution (26) est disposé de manière tournée de sensiblement 90° ou sensiblement 270° par rapport aux premier et deuxième emplacements de réception (22, 23).

7. Unité de transfert (14) selon l'une quelconque des revendications 1 à 5, **caractérisée en ce que** l'unité de transfert (14) présente :
un premier bras de transfert (24) qui est mobile entre une première position de réception permettant la réception d'un premier emballage-coque (4) à partir d'un premier emplacement de réception (22) et une première position de distribution permettant la dépose du premier emballage-coque (4) dans un premier emplacement de distribution (27) et
un deuxième bras de transfert (25) qui est mobile entre une deuxième position de réception permettant la réception d'un deuxième emballage-coque (6) à partir d'un deuxième emplacement de réception (23) et une deuxième position de distribution permettant la dépose du deuxième emballage-coque (6) dans un deuxième emplacement de distribution (29),
unité dans laquelle le premier et le deuxième bras de transfert (24, 25) sont disposés des deux côtés d'un plan médian longitudinal (L) de l'unité de transfert (14),
dans laquelle les premier et deuxième emplacements de réception (22, 23) sont disposés de manière décalée vers l'extérieur par rapport au plan médian longitudinal (L) et les premier et deuxième emplacements de distribution (27, 29) sont disposés de manière décalée vers l'extérieur par rapport au plan médian longitudinal (L),
dans laquelle les premier et deuxième emplacements de réception (22, 23) sont disposés l'un à côté de l'autre en rang transversalement au plan médian longitudinal (L) et dans laquelle les premier et deuxième emplacements de distribution (27, 29) sont disposés l'un à côté de l'autre en rang transversalement au plan médian longitudinal (L) et dans laquelle les premier et deuxième emplacements de distribution (27, 29) sont disposés de manière tournée de sensiblement 90° ou sensiblement 270° par rapport aux premier et deuxième emplacements de réception (22, 23).

8. Unité de transfert (14) selon la revendication 6 ou 7, **caractérisée en ce que** les deuxièmes segments (31, 33) des premier et deuxième bras de transfert (24, 25), dans la position de réception respective, sont orientés de manière inclinée vers l'intérieur respectivement par rapport au plan médian longitudinal (L), et **en ce que** les deuxièmes segments (31, 33) du premier ou deuxième bras de transfert (24, 25), dans la position de distribution respective, sont orientés de manière inclinée vers l'intérieur respectivement par rapport au plan médian longitudinal (L).

9. Unité de transfert (14) selon l'une quelconque des revendications 1 à 5, **caractérisée en ce que** l'unité de transfert (14) présente :
un premier bras de transfert (24) qui est mobile entre une première position de réception permettant la réception d'un premier emballage-coque (4) à partir d'un premier emplacement de réception (22) et une première position de distribution permettant la dépose du premier emballage-coque (4) dans un premier emplacement de distribution (27), et
un deuxième bras de transfert (25) qui est mobile entre une deuxième position de réception permettant la réception d'un deuxième emballage-coque (6) à partir d'un deuxième emplacement de réception (23) et une deuxième position de distribution permettant la dépose du deuxième emballage-coque (6) dans un deuxième emplacement de distribution (29),
unité dans laquelle le premier et le deuxième bras de transfert (24, 25) sont disposés l'un à côté de l'autre le long du premier axe (A1) et sont orientés de manière identique,
dans laquelle les premier et deuxième emplacements de réception (22, 23) sont disposés l'un à côté de l'autre en rang parallèlement au premier axe (A1) et dans laquelle les premier et deuxième emplacements de distribution (27, 29) sont disposés l'un à côté de l'autre en rang parallèlement au premier axe (A1), et
dans laquelle les premier et deuxième emplacements de distribution (27, 29) sont disposés de manière tournée de sensiblement 90° ou sensiblement 270° par rapport aux premier et deuxième emplacements de réception (22, 23).

10. Procédé permettant le transfert d'emballages-coques (4, 6) au moyen de l'unité de transfert (14) selon l'une quelconque des revendications précédentes d'un emplacement de réception (22, 23) vers un emplacement de distribution (26, 27, 29), selon lequel chaque emballage-coque (4, 6) est déposé dans l'emplacement de distribution (26, 27, 29), en comparaison de l'emplacement de réception (22, 23), avec la même face vers le haut, mais de manière tournée sensiblement de 90° ou sensiblement 270° autour de son centre.

11. Procédé permettant le transfert d'emballages-coques (4, 6) selon la revendication 10, en rattachement à la revendication 6, dans lequel les premier et deuxième emballages-coques (4, 6), dans l'emplacement de distribution (26), se situent avec la même face vers le haut et forment une pile affleurante mais selon lequel chaque deuxième emballage-coque (4, 6) est tourné de 180° en comparaison des emballages-coques (4, 6) restants.

12. Procédé permettant le transfert d'emballages-coques (4, 6) selon la revendication 11, dans lequel les premier et deuxième bras de transfert (24, 25) exécutent des mouvements de pivotement en sens contraire en va-et-vient.

13. Procédé permettant le transfert d'emballages-coques (4, 6) selon la revendication 10, en rattachement à la revendication 7, selon lequel les premier et deuxième emballages-coques (4, 6), dans les premier et deuxième emplacements de distribution (27, 29), se situent avec la même face vers le haut et parallèlement l'un à l'autre, mais sont respectivement orientés de manière tournée l'un vers l'autre avec le même bord latéral.

14. Procédé permettant le transfert d'emballages-coques (4, 6) selon la revendication 10, en rattachement à la revendication 9, selon lequel les premier et deuxième emballages-coques (4, 6), dans les premier et deuxième emplacements de distribution (27, 29), se situent avec la même face vers le haut et parallèlement l'un à l'autre, selon lequel respectivement le même bord latéral des premier et deuxième emballages-coques (4, 6) est tourné dans la même direction.

15. Procédé permettant le transfert d'emballages-coques (4, 6) selon la revendication 13 ou 14, selon lequel les premier et deuxième bras de transfert (24, 25) exécutent des mouvements de pivotement dans le même sens en va-et-vient.
